(19) Europäisches Patentamt
European Patent Office
Office européen des brevets

(11) **EP 4 418 593 A1**

(12) **EUROPEAN PATENT APPLICATION**

(43) Date of publication:
**21.08.2024 Bulletin 2024/34**

(21) Application number: **24155246.2**

(22) Date of filing: **01.02.2024**

(51) International Patent Classification (IPC):
**H04L 5/00** (2006.01)

(52) Cooperative Patent Classification (CPC):
**H04L 5/0035; H04L 5/0007**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **17.02.2023 FI 20235200**

(71) Applicant: **Nokia Technologies Oy**
**02610 Espoo (FI)**

(72) Inventors:
  • **BARACCA, Paolo**
    **Munich (DE)**
  • **CAPORAL DEL BARRIO, Samantha**
    **Aalborg (DK)**
  • **MARCONE, Alessio**
    **Munich (DE)**
  • **KARIMIDEHKORDI, Ali**
    **Munich (DE)**
  • **TOFT, Morten**
    **Svenstrup (DK)**
  • **HAKOLA, Sami-Jukka**
    **Kempele (FI)**
  • **KARJALAINEN, Juha Pekka**
    **Sotkamo (FI)**
  • **ROM, Christian**
    **Aalborg (DK)**
  • **KOSKELA, Timo**
    **Oulu (FI)**
  • **DEGHEL, Matha**
    **Montrouge (FR)**
  • **CAUDURO DIAS DE PAIVA, Rafael**
    **Aalborg (DK)**

(74) Representative: **Nokia EPO representatives**
**Nokia Technologies Oy**
**Karakaari 7**
**02610 Espoo (FI)**

(54) **METHOD, APPARATUS AND COMPUTER PROGRAM PRODUCT FOR SINGLE ACTIVE RADIO FREQUENCY CHAIN USER EQUIPMENT WITH UPLINK MULTI-TRANSMISSION RECEPTION POINT TIME DIVISION MULTIPLEX**

(57) There are provided apparatuses, methods and computer program products. In accordance with an embodiment, there is disclosed a method comprising obtaining by a terminal device first multiplexing symbols including at least one cyclic prefix for transmission to a first transmission reception point; obtaining by the terminal device second multiplexing symbols including at least one cyclic prefix for transmission to a second transmission reception point, wherein the first multiplexing symbols and the second multiplexing symbols have an overlap area; and creating by the terminal device a combined multiplexing symbol for the overlap area, which includes signals for the first transmission reception point and the second transmission reception point.

Fig. 7

EP 4 418 593 A1

## Description

## TECHNICAL FIELD

The present invention relates to a method and apparatus for operating a single active RF frequency chain user equipment with multiple transmission reception points using time division multiplexing scheme.

## BACKGROUND

This section is intended to provide a background or context to the invention that is recited in the claims. The description herein may include concepts that could be pursued, but are not necessarily ones that have been previously conceived or pursued. Therefore, unless otherwise indicated herein, what is described in this section is not prior art to the description and claims in this application and is not admitted to be prior art by inclusion in this section.

5G-NR (5th generation New Radio) is a new radio access technology which has been developed by the 3rd generation partnership project (3GPP) for the 5th generation mobile networks. 5G-NR has been specified within 3GPP to be able to coexist with 4G-LTE (Long Term Evolution) within the same spectrum. In 5G systems a mobile communication device, which may also be called as a user equipment (UE) can operate with a multiple of transmission reception points (multi-TRP, mTRP), both in uplink (UL) and downlink (DL). In UL when using time division multiplex (TDM) scheme, the UE multiplexes in the time domain the transmissions toward different TRPs. If there is rather large difference in the propagation delay among the different UE-TRP links, there may be overlap in the UL transmissions.

The transmission reception point may be characterized by one of a coresetPoolIndex (e.g. 0 or 1) or a Reference signal index in a TCI (Transmission Configuration Indicator) state.

When a UE is equipped (and can use) multiple Tx RF chains, it may be able to configure, if there is no obstacle/blockage, its panels/sub-panels such that each chain is transmitting with a certain specific timing advance (TA) toward each TRP. Therefore, in such a situation, even a large difference in the two propagation delays can be handled.

On the other hand, when a UE is equipped with just one active Tx RF chain, for example because it is equipped with a single panel or because it is multi-panel but has only one single shared uplink (UL) digital baseband, there may be an overlap in the time domain of the UL signals with two different TAs because of the different propagation delays of the two links between the UE and two transmission reception points. If the UE is equipped with a single Tx RF chain or equipped with multiple Tx RF chains but using only one Tx RF chain for any reason, (e.g., UE power saving, blockage in front of some panels, etc...), this overlap in the time domain may force the UE to choose to transmit either UL1 or UL2 and cause losing one or more symbols of the two slots.

Therefore, a problem to be solved may be how a single active Tx RF chain UE can be allowed to optimize UL slots' usability for UL mTRP operation when the transmit time difference toward the two TRPs is large, e.g. larger than a cyclic prefix (CP) length, and the UL scheduling of the two TRPs are non-overlapping in the frequency domain.

## SUMMARY

Some embodiments provide a method and apparatus for operating a single active RF frequency chain user equipment with multiple transmission reception points.

Some embodiments are implemented in the context of the 5G communication systems and provide a solution to allow a single active Tx RF chain UE optimize UL slots' usability for UL mTRP operation when the time difference between the TAs for the two TRPs is larger than the CP length and the UL scheduling of the two TRPs are non-overlapping in the frequency domain.

In this specification some embodiments of signalling solutions will be described to enable a UE, that can be either a single RF chain UE or equipped with multiple RF chains but operating with just one RF chain, to utilize a combined OFDM (orthogonal frequency division multiplexing) symbol scheme.

In accordance with some embodiments both UE and NW indications are provided to enable such a feature.

In accordance with an embodiment, the UE creates a combined OFDM symbol, where the last OFDM symbol of an ending slot targeted for the first transmission reception point TRP1 and the first OFDM symbol of a starting slot targeted for a second transmission reception point TRP2 are merged. A prolonged cyclic prefix (CP), whose duration depends on how large the difference between the two timing advances (TA) is, is added to this combined OFDM symbol. This combined OFDM symbol with prolonged CP may be transmitted using potentially a broader beam toward both transmission reception points TRP1, TRP2 and/or using increased transmission power.

According to a first aspect there is provided a terminal device comprising:

one or more transceivers; and
one or more processors communicatively coupled to one or more transceivers, wherein the one or more processors are configured to cause the terminal device to:

obtain first multiplexing symbols including at least one cyclic prefix for transmission to a first transmission reception point;
obtain second multiplexing symbols including at least one cyclic prefix for transmission to a second transmission reception point, wherein the first multiplexing symbols and the second multiplexing symbols have an overlap area; create a combined multiplexing symbol for the overlap area, which includes signals for the first transmission reception point and the second transmission reception point.

In accordance with an embodiment of the terminal device the one or more processors are configured to cause the terminal device to use time division multiplexing to transmit the first multiplexing symbols, the combined multiplexing symbol, and the second multiplexing symbols.

In accordance with an embodiment of the terminal device there is a timing difference between transmissions from the terminal device to the first transmission reception point and transmissions from the terminal device to the second transmission reception point.

In accordance with an embodiment of the terminal device the combined multiplexing symbol includes all signals transmitted in both multiplexing symbols n towards the first transmission reception point TRP1 and n+1 towards the second transmission reception point TRP2.

In accordance with an embodiment of the terminal device the one or more processors are configured to cause the terminal device to add to the combined multiplexing symbol a prolonged cyclic prefix, whose duration is longer than the at least one cyclic prefix and depends on how large is a transmit time difference between the first multiplexing symbols and the second multiplexing symbols.

In accordance with an embodiment of the terminal device the one or more processors are configured to cause the terminal device to transmit the combined multiplexing symbol with the prolonged cyclic prefix using a broader beam toward the first transmission reception point and the second transmission reception point than when transmitting the first multiplexing symbols to the first transmission reception point and the second multiplexing symbols to the second transmission reception point.

In accordance with an embodiment of the terminal device the one or more processors are configured to cause the terminal device to increase the transmission power to compensate for a loss in beamforming gain due to using the broader beam, or for the loss in power spectral density due to transmitting a larger number of physical resource blocks in the combined multiplexing symbol, or for the different path-loss toward the first transmission reception point and the second transmission reception point.

In accordance with an embodiment of the terminal device the one or more processors are configured to cause the terminal device to perform one or more of the following:

- using different power levels for the signals toward the two transmission reception points by boosting the signal intended to a weaker transmission reception point;
- setting a transmit power to compensate a strongest transmission reception point path-loss;
- setting a transmit power to compensate a weakest transmission reception point path-loss;
- setting a transmit power to compensate in the middle the path-loss toward the two transmission reception points.

In accordance with an embodiment of the terminal device the one or more processors are configured to cause the terminal device to schedule the transmission of the combined multiplexing symbol on the basis of an uplink sounding reference signal transmission triggered for a broader beamformer.

According to a second aspect there is provided a method comprising:

obtaining by a terminal device first multiplexing symbols including at least one cyclic prefix for transmission to a first transmission reception point; obtaining by the terminal device second multiplexing symbols including at least one cyclic prefix for transmission to a second transmission reception point, wherein the first multiplexing symbols and the second multiplexing symbols have an overlap area; and creating by the terminal device a combined multiplexing symbol for the overlap area, which includes signals for the first transmission reception point and the second transmission reception point.

In accordance with an embodiment the method comprises using time division multiplexing to transmit the first multiplexing symbols, the combined multiplexing symbol, and the second multiplexing symbols.

In accordance with an embodiment of the method there is a timing difference between transmissions from the terminal device to the first transmission reception point and transmissions from the terminal device to the second transmission reception point.

In accordance with an embodiment of the method the combined multiplexing symbol includes all signals transmitted in both multiplexing symbols n towards the first transmission reception point TRP1 and n+1 towards the second transmission reception point TRP2.

In accordance with an embodiment the method comprises adding by the terminal device the combined multiplexing symbol a prolonged cyclic prefix, whose duration is longer than the at least one cyclic prefix and depends on how large is a transmit time difference between the first multiplexing symbols and the second multiplexing symbols.

In accordance with an embodiment the method comprises transmitting by the terminal device the combined multiplexing symbol with the prolonged cyclic prefix using a broader beam toward the first transmission reception point and the second transmission reception point than when transmitting the first multiplexing symbols to the first transmission reception point and the second multiplexing symbols to the second transmission reception point.

In accordance with an embodiment the method comprises increasing by the terminal device the transmission power to compensate for a loss in beamforming gain due to using the broader beam, or for the loss in power spectral density due to transmitting a larger number of physical resource blocks in the combined multiplexing symbol, or for the different path-loss toward the first transmission reception point and the second transmission reception point.

In accordance with an embodiment the method comprises performing by the terminal device one or more of the following:

- using different power levels for the signals toward the two transmission reception points by boosting the signal intended to a weaker transmission reception point;
- setting a transmit power to compensate a strongest transmission reception point path-loss;
- setting a transmit power to compensate a weakest transmission reception point path-loss;
- setting a transmit power to compensate in the middle the path-loss toward the two transmission reception points.

In accordance with an embodiment of the method the first multiplexing symbols, the second multiplexing symbols and the combined multiplexing symbol are orthogonal frequency division multiplexing symbols.

According to a third aspect there is provided a terminal device comprising:

means for obtaining first multiplexing symbols including at least one cyclic prefix for transmission to a first transmission reception point;
means for obtaining second multiplexing symbols including at least one cyclic prefix for transmission to a second transmission reception point, wherein the first multiplexing symbols and the second multiplexing symbols have an overlap area; and
means for creating a combined multiplexing symbol for the overlap area, which includes signals for the first transmission reception point and the second transmission reception point.

In accordance with an embodiment the terminal device comprises means for using time division multiplexing to transmit the first multiplexing symbols, the combined multiplexing symbol, and the second multiplexing symbols.

In accordance with an embodiment of the terminal device there is a timing difference between transmissions from the terminal device to the first transmission reception point and transmissions from the terminal device to the second transmission reception point.

In accordance with an embodiment of the terminal device the combined multiplexing symbol includes all signals transmitted in both multiplexing symbols n towards the first transmission reception point TRP1 and n+1 towards the second transmission reception point TRP2.

In accordance with an embodiment the terminal device comprises means for adding by the terminal device the combined multiplexing symbol a prolonged cyclic prefix, whose duration is longer than the at least one cyclic prefix and depends on how large is a transmit time difference between the first multiplexing symbols and the second multiplexing symbols.

In accordance with an embodiment the terminal device comprises means for transmitting by the terminal device the combined multiplexing symbol with the prolonged cyclic prefix using a broader beam toward the first transmission reception point and the second transmission reception point than when transmitting the first multiplexing symbols to the first transmission reception point and the second multiplexing symbols to the second transmission reception point.

In accordance with an embodiment the terminal device comprises means for increasing by the terminal device the transmission power to compensate for a loss in beamforming gain due to using the broader beam, or for the loss in power spectral density due to transmitting a larger number of physical resource blocks in the combined multiplexing symbol, or for the different path-loss toward the first transmission reception point and the second transmission reception point.

In accordance with an embodiment the terminal device comprises means for performing by the terminal device one or more of the following:

- using different power levels for the signals toward the two transmission reception points by boosting the signal intended to a weaker transmission reception point;
- setting a transmit power to compensate a strongest transmission reception point path-loss;
- setting a transmit power to compensate a weakest transmission reception point path-loss;
- setting a transmit power to compensate in the middle the path-loss toward the two transmission reception points.

In accordance with an embodiment of the terminal device the first multiplexing symbols, the second multiplexing symbols and the combined multiplexing symbol are orthogonal frequency division multiplexing symbols.

According to a fourth aspect there is provided a computer readable storage media comprising code for use by an apparatus, which when executed by a processor, causes the apparatus to perform:

obtaining by a terminal device first multiplexing symbols including at least one cyclic prefix for transmission to a first transmission reception point;
obtaining by the terminal device second multiplexing symbols including at least one cyclic prefix for transmission to a second transmission reception point, wherein the first multiplexing symbols and the second multiplexing symbols have an overlap area; and
creating by the terminal device a combined multiplexing symbol for the overlap area, which includes signals for the first transmission reception point and the second transmission reception point.

## BRIEF DESCRIPTION OF THE DRAWINGS

For a more complete understanding of example embodiments of the present invention, reference is now made to the following descriptions taken in connection with the accompanying drawings in which:

Fig. 1 shows a block diagram of one possible and non-limiting example in which the examples may be practiced;
Fig. 2a illustrates a part of a wireless network having several base stations and an exemplary user equipment;
Fig. 2b illustrates a simplified example of a multi-transmission reception point context;
Fig. 3 illustrates an example of uplink transmission overlapping due to two TAs;
Fig. 4a illustrates what a UE is supposed to transmit with two different TAs and can transmit only if operating with multiple RF chains;
Fig. 4b illustrates a solution exploiting a combined OFDM symbol with prolonged CP transmitted with a broader beam when a UE operates with one RF chain, in accordance with an embodiment;
Fig. 4c illustrates an example of beams the UE may use when communicating with two transmission reception points;
Fig. 5a illustrates a combined OFDM symbol generation with non-overlapping resources assigned to the two transmissions;
Fig. 5b illustrates a combined OFDM symbol generation with overlapping resources assigned to the two transmissions;
Fig. 6a shows signal processing performed at the UE and the TRPs, in accordance with an embodiment;
Fig. 6b shows a combined OFDM symbol with prolonged cyclic prefix (left) and a normal (not prolonged) cyclic prefix plus a cyclic suffix (right);
Fig. 7 shows a diagram of operations at a user equipment utilizing the combined multiplexing scheme in a multi-TRP context, in accordance with an embodiment;
Fig. 8 shows a block diagram of an apparatus in accordance with at least some embodiments; and
Fig. 9 shows a part of an exemplifying wireless communications access network in accordance with at least some embodiments.

## DETAILED DESCRIPTON OF SOME EXAMPLE EMBODIMENTS

The following embodiments are exemplary. Although the specification may refer to "an", "one", or "some" embodiment(s) in several locations, this does not necessarily mean that each such reference is to the same embodiment(s), or that the feature only applies to a single embodiment. Single features of different embodiments may also be combined to provide other embodiments.

It should be noted here that in this specification, the term 'base station' refers to a logical element containing logical communication system layers (e.g. L1, L2, L3). The base stations of different RATs may be implemented in the same hardware or at separate hardware. It should also be mentioned that although the expressions "each base station" and "each mobile station" or "each user equipment" may be used, these terms need not mean every existing base station, mobile station or user equipment but base stations, mobile stations or user equipment in a certain area or set. For example, each base station may mean all base stations within a certain geographical area or all base stations of an operator of a wireless communication network or a sub-set of base stations of an operator of a wireless communication network.

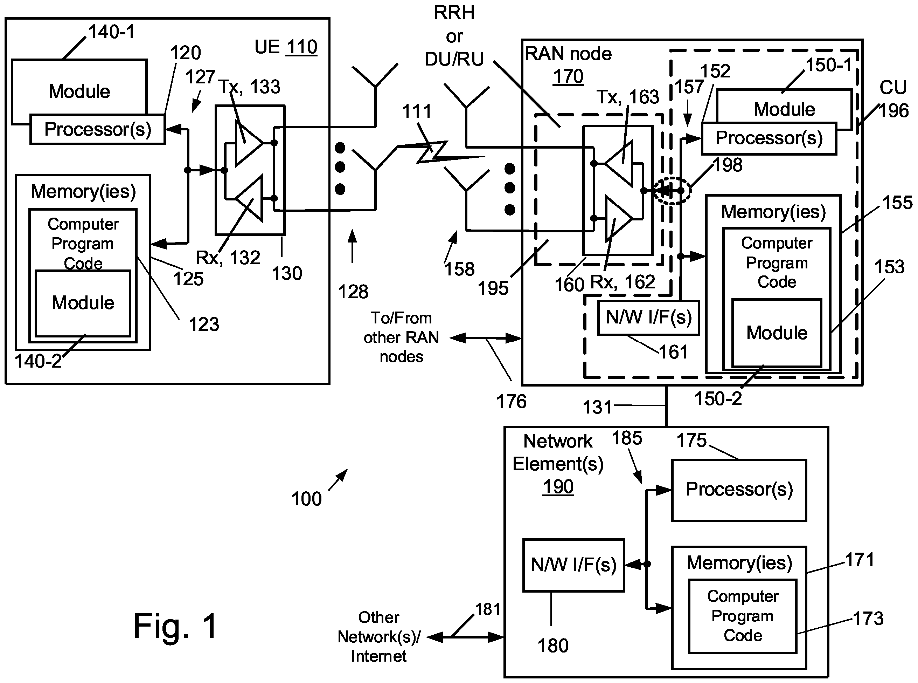

Fig. 1 shows a block diagram of one possible and non-limiting example in which the examples may be practiced. A user equipment (UE) 110, radio access network (RAN) node 170, and network element(s) 190 are illustrated. In the example of FIG. 1, the user equipment 110 is in wireless communication with a wireless network 100. A user equipment is a wireless device that can access the wireless network 100. The user equipment 110 includes one or more processors 120, one or more memories 125, and one or more transceivers 130 interconnected through one or more buses 127. Each of the one or more transceivers 130 includes a receiver, Rx, 132 and a transmitter, Tx, 133. The one or more buses 127 may be address, data, or control buses, and may include any interconnection mechanism, such as a series of lines on a motherboard or integrated circuit, fibre optics or other optical communication equipment, and the like. The one or more transceivers 130 are connected to one or more antennas 128. The one or more memories 125 include computer program code 123. The user equipment 110 includes a module 140, which may be implemented in a number of ways. The module 140 may be implemented in hardware as module 140-1, such as being implemented as part of the one or more processors 120. The module 140-1 may also be implemented as an integrated circuit or through other hardware such as a programmable gate array. In another example, the module 140 may be implemented as module 140-2, which is implemented as computer program code 123 and is executed by the one or more processors 120. For instance, the one or more memories 125 and the computer program code 123 may be configured to, with the one or more processors 120, cause the user equipment 110 to perform one or more of the operations as described herein. The user equipment 110 communicates with RAN node 170 via a wireless link 111. The modules 140-1 and 140-2 may be configured to implement the functionality of the user equipment as described herein.

The RAN node 170 in this example is a base station that provides access by wireless devices such as the user equipment 110 to the wireless network 100. Thus, the RAN node 170 (and the base station) may also be called as an access point of a wireless communication network. The RAN node 170 may be, for example, a base station for 5G, also called New Radio (NR). In 5G, the RAN node 170 may be a NG-RAN node, which is defined as either a gNB or an ng-eNB. A gNB is a node providing NR user plane and control plane protocol terminations towards the UE and connected via the NG interface to a 5GC (such as, for example, the network element(s) 190). The ng-eNB is a node providing E-UTRA user plane and control plane protocol terminations towards the UE and connected via the NG interface to the 5GC. The NG-RAN node may include multiple gNBs, which may also include a central unit (CU) (gNB-CU) 196 and distributed unit(s) (DUs) (gNB-DUs), of which DU 195 is shown. Note that the DU 195 may include or be coupled to and control a radio unit (RU). The gNB-CU 196 is a logical node hosting radio resource control (RRC), SDAP and PDCP protocols of the gNB or RRC and PDCP protocols of the en-gNB that controls the operation of one or more gNB-DUs. The gNB-CU 196 terminates the F1 interface connected with the gNB-DU 195. The F1 interface is illustrated as reference 198, although reference 198 also illustrates a link between remote elements of the RAN node 170 and centralized elements of the RAN node 170, such as between the gNB-CU 196 and the gNB-DU 195. The gNB-DU 195 is a logical node hosting RLC, MAC and PHY layers of the gNB or en-gNB, and its operation is partly controlled by gNB-CU 196. One gNB-CU 196 supports one or multiple cells. One cell is supported by one gNB-DU 195. The gNB-DU 195 terminates the F1 interface 198 connected with the gNB-CU 196. Note that the DU 195 is considered to include the transceiver 160, e.g., as part of a RU, but some examples of this may have the transceiver 160 as part of a separate RU, e.g., under control of and connected to the DU 195. The RAN node 170 may also be an eNB (evolved NodeB) base station, for LTE (long term evolution), or any other suitable base station or node.

The RAN node 170 includes one or more processors 152, one or more memories 155, one or more network interfaces (N/W I/F(s)) 161, and one or more transceivers 160 interconnected through one or more buses 157. Each of the one or more transceivers 160 includes a receiver, Rx, 162 and a transmitter, Tx, 163. The one or more transceivers 160 are connected to one or more antennas 158. The one or more memories 155 include computer program code 153. The CU 196 may include the processor(s) 152, memory(ies) 155, and network interfaces 161. Note that the DU 195 may also contain its own memory/memories and processor(s), and/or other hardware, but these are not shown.

The RAN node 170 includes a module 150, comprising one of or both parts 150-1 and/or 150-2, which may be implemented in a number of ways. The module 150 may be implemented in hardware as module 150-1, such as being implemented as part of the one or more processors 152. The module 150-1 may also be implemented as an integrated circuit or through other hardware such as a programmable gate array. In another example, the module 150 may be implemented as module 150-2, which is implemented as computer program code 153 and is executed by the one or more processors 152. For instance, the one or more memories 155 and the computer program code 153 are configured to, with the one or more processors 152, cause the RAN node 170 to perform one or more of the operations as described herein. Note that the functionality of the module 150 may be distributed, such as being distributed between the DU 195 and the CU 196, or be implemented solely in the DU 195. The modules 150-1 and 150-2 may be configured to implement the functionality of the base station described herein. Such functionality of the base station may include a location management function (LMF) implemented based on functionality of the LMF described herein. Such LMF may also be implemented within the RAN node 170 as a location management component (LMC).

The one or more network interfaces 161 communicate over a network such as via the links 176 and 131. Two or more gNBs 170 may communicate using, e.g., link 176. The link 176 may be wired or wireless or both and may implement, for example, an Xn interface for 5G, an X2 interface for LTE, or other suitable interface for other standards.

The one or more buses 157 may be address, data, or control buses, and may include any interconnection mechanism, such as a series of lines on a motherboard or integrated circuit, fiber optics or other optical communication equipment, wireless channels, and the like. For example, the one or more transceivers 160 may be implemented as a remote radio head (RRH) 195 for LTE or a distributed unit (DU) 195 for gNB implementation for 5G, with the other elements of the RAN node 170 possibly being physically in a different location from the RRH/DU 195, and the one or more buses 157 could be implemented in part as, for example, fiber optic cable or other suitable network connection to connect the other elements (e.g., a central unit (CU), gNB-CU) of the RAN node 170 to the RRH/DU 195. Reference 198 also indicates those suitable network link(s).

It is noted that description herein indicates that "cells" perform functions, but it should be clear that equipment which forms the cell may perform the functions. The cell makes up part of a base station. That is, there can be multiple cells per base station. For example, there could be three cells for a single carrier frequency and associated bandwidth, each cell covering one-third of a 360 degree area so that the single base station's coverage area covers an approximate oval or circle. Furthermore, each cell can correspond to a single carrier and a base station may use multiple carriers. So, if there are three 120 degree cells per carrier and two carriers, then the base station has a total of 6 cells.

The wireless network 100 may include a network element or elements 190 that may include core network functionality, and which provides connectivity via a link or links 181 with a further network, such as a telephone network and/or a data communications network (e.g., the Internet). Such core network functionality for 5G may include location management functions (LMF(s)) and/or access and mobility management function(s) (AMF(S)) and/or user plane functions (UPF(s)) and/or session management function(s) (SMF(s)). Such core network functionality for LTE may include MME (Mobility Management Entity)/SGW (Serving Gateway) functionality. These are merely example functions that may be supported by the network element(s) 190, and note that both 5G and LTE functions might be supported. The RAN node 170 is coupled via a link 131 to the network element 190. The link 131 may be implemented as, e.g., an NG interface for 5G, or an S1 interface for LTE, or other suitable interface for other standards. The network element 190 includes one or more processors 175, one or more memories 171, and one or more network interfaces (N/W I/F(s)) 180, interconnected through one or more buses 185. The one or more memories 171 include computer program code 173. The one or more memories 171 and the computer program code 173 are configured to, with the one or more processors 175, cause the network element 190 to perform one or more operations such as functionality of an LMF as described herein. In some examples, a single LMF could serve a large region covered by hundreds of base stations.

The wireless network 100 may implement network virtualization, which is the process of combining hardware and software network resources and network functionality into a single, software-based administrative entity, a virtual network. Network virtualization involves platform virtualization, often combined with resource virtualization. Network virtualization is categorized as either external, combining many networks, or parts of networks, into a virtual unit, or internal, providing network-like functionality to software containers on a single system. Note that the virtualized entities that result from the network virtualization are still implemented, at some level, using hardware such as processors 152 or 175 and memories 155 and 171, and also such virtualized entities create technical effects.

The computer readable memories 125, 155, and 171 may be of any type suitable to the local technical environment and may be implemented using any suitable data storage technology, such as semiconductor based memory devices, flash memory, magnetic memory devices and systems, optical memory devices and systems, fixed memory and removable memory. The computer readable memories 125, 155, and 171 may be means for performing storage functions. The processors 120, 152, and 175 may be of any type suitable to the local technical environment, and may include one or more of general purpose computers, special purpose computers, microprocessors, digital signal processors (DSPs) and processors based on a multi-core processor architecture, as non-limiting examples. The processors 120, 152, and 175 may be means for performing functions, such as controlling the UE 110, RAN node 170, network element(s) 190, and other functions as described herein.

In general, the various embodiments of the user equipment 110 can include, but are not limited to, cellular telephones such as smart phones, tablets, personal digital assistants (PDAs) having wireless communication capabilities, portable computers having wireless communication capabilities, image capture devices such as digital cameras having wireless communication capabilities, gaming devices having wireless communication capabilities, music storage and playback appliances having wireless communication capabilities, Internet appliances permitting wireless Internet access and browsing, tablets with wireless communication capabilities, as well as portable units or terminals that incorporate combinations of such functions.

Module 150-1 and/or module 150-2 may implement the functionalities and signaling of the gNB or radio node as herein described. Computer program code 173 may implement the functionalities and signaling of the AMF or network element as herein described.

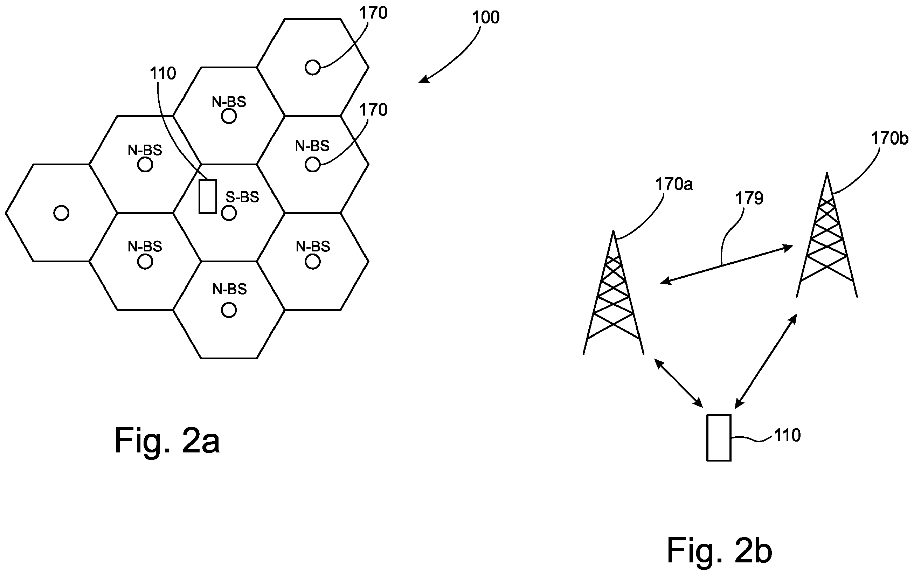

Fig. 2a illustrates a part of a wireless network 100 having several base stations 170 and an exemplary user equipment 110. In Fig. 2a it is assumed that the base station marked as S-BS is the serving base station, when the user equipment is in connected state, and the base station where the user equipment is camped on when not in connected state. Some of the neighbouring base stations are labelled as N-BS in Fig. 2a. In practical situations the serving base station and the camped on base station may change e.g. when the user equipment is moving, or if the signal strength from different base stations changes (e.g. signals from a neighbouring base station N-BS becomes stronger than signals from the currently serving base station).

Fig. 2b illustrates a simplified example of a multi-transmission reception point context. A user equipment 110 may communicate with two or more transmission reception points in a multi-TRP context. In Fig. 2b two transmission reception points are shown: a first transmission reception point 170a and a second transmission reception point 170b. These transmission reception points 170a, 170b may be cells or access points of the wireless communication network. These transmission reception points 170a, 170b may also be able to communicate with each other e.g. via a backhaul connection 179.

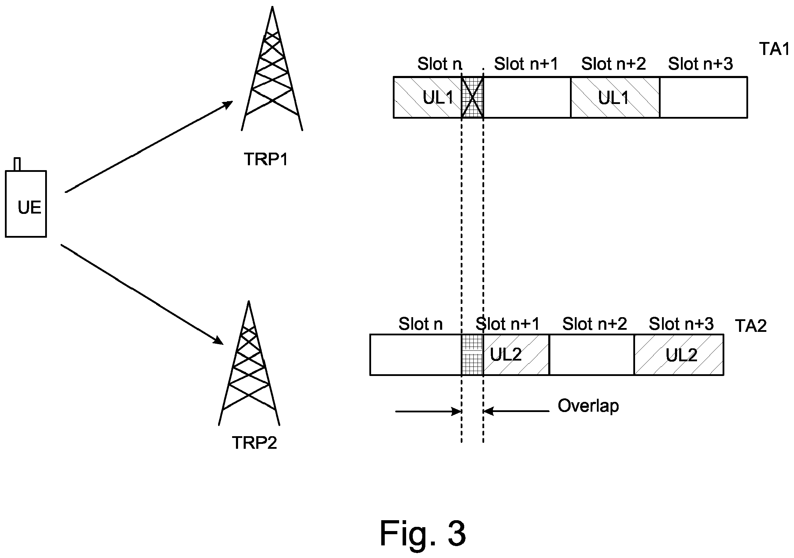

Fig. 3 illustrates an example of a situation when there may be on overlap in time domain of UL signals with two different TAs, when a UE is equipped with just one active Tx RF chain. One reason for the overlap is that there are different propagation delays of the two links TRP1-UE and TRP2-UE. In this simple example, the slot toward TRP2 (blocks marked with UL2 in Fig. 3) is supposed to start "before" the end of the slot toward TRP1 (blocks marked with UL1 in Fig. 3). In this example, this situation happens because the timing advance command TAC for UL1 is smaller than TAC for UL2, and therefore there is an overlap on the transmit time for UL1 and UL2. In another alternative, if the reference signal used by the UE for determining the reference timing for UL1 and UL2 differs, e.g. a reference signal (RS) for UL1 is received with smaller delay than RS for UL2, the same overlap would occur. If the UE is equipped with a single Tx RF chain or equipped with multiple Tx RF chains but using only one Tx RF chain for any reason, (e.g., UE power saving, blockage in front of some panels, etc...), this overlap in the time domain may force the UE to choose to transmit either UL1 or UL2 and cause losing one or more symbols of the two slots.

In the following, some embodiments are presented which mainly focus on the problem of how a single active Tx RF chain UE can be allowed to optimize UL slots' usability for UL mTRP operation when the time difference between the TAs for the two TRPs is larger than the CP length and the UL scheduling of the two TRPs are non-overlapping in the frequency domain.

In the examples of Figs. 2b, 3 and 4c the user equipment has two serving TRPs, namely TRP-1 (e.g. the first TRP 170a in Fig. 2b) and TRP-2 (e.g. the second TRP 170b in Fig. 2b), but the number of TRPs could also be different from that, e.g. three, four or eight TRPs.

In the following, the combined orthogonal frequency division multiplexing scheme (also called as a combined OFDM symbol scheme in this specification), is used as an example of the combined multiplexing scheme, but similar principles may also be applied with other combined multiplexing schemes as well.

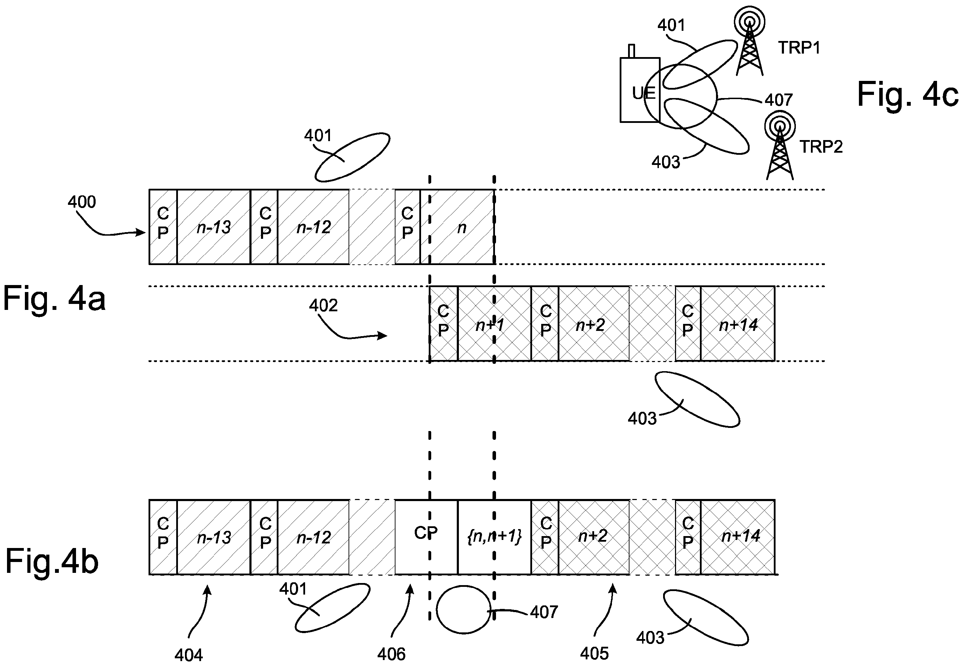

An example of generation and transmission of a combined OFDM symbol with prolonged CP will now be described. The steps presented below relate to the operations that are performed at the UE side to implement the scheme making use of the combined OFDM symbol, with reference to Figs. 4a, 4b and 4c.

Fig. 4a illustrates an example where the UE communicates with two transmission reception points, namely a first transmission reception point TRP1 and a second transmission reception point TRP2, by utilising multiple RF chains. The UE transmits OFDM symbols 400 to the first transmission reception point TRP1 using a first beam 401 (Fig. 4c) and transmits OFDM symbols 402 to the second transmission reception point TRP2 using a second beam 403. As can be seen from Fig. 4a, these transmissions are partly overlapping.

Fig. 4b illustrates an example where the UE communicates with two transmission reception points, namely a first transmission reception point TRP1 and a second transmission reception point TRP2, by utilising only one RF chain and the combined OFDM symbol scheme. The UE transmits OFDM symbols 404 to the first transmission reception point TRP1 using the first beam 401 and transmits OFDM symbols 405 to the second transmission reception point TRP2 using the second beam 403. The combined OFDM symbol 406 in this example are transmitted after the transmission to the first transmission reception point TRP1 and before the transmission to the second transmission reception point TRP2. In the transmission of the combined OFDM symbols 406 a third beam 407 may be utilized. The third beam 407 is, for example, broader than the first beam 401 and the second beam 402 so that it is directed to both of the first transmission reception point TRP1 and the second transmission reception point TRP2.

The UE creates the combined OFDM symbol, where the last OFDM symbol (with index n in Fig. 4a) of the ending slot targeted for TRP1 and the first OFDM symbol (with index n+1 in Fig. 4a) of the starting slot targeted for TRP2 are merged.

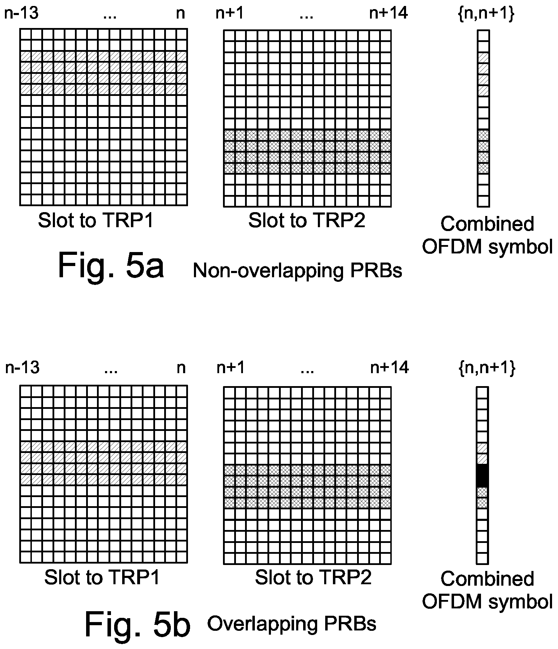

The combined OFDM symbol includes all signals transmitted in both OFDM symbols n towards the first transmission reception point TRP1 and n+1 towards the second transmission reception point TRP2. Therefore, the combined OFDM symbol may be formed by "merging" the two OFDM symbols in the frequency domain, as shown in Figs. 5a and 5b, on the right hand side.

It should be noted that these signals may be different kinds of signals, such as data and reference signals like demodulation reference signals (DMRS) or phase tracking reference signals (PTRS), or other signals as well which can be transmitted using the combined multiplexing scheme.

When the UE transmissions toward the transmission reception points TRP1 and TRP2 use different physical resource blocks (PRB), the merge may be straightforward as both transmissions in OFDM symbols n and n+1 can be directly mapped to the corresponding PRBs in the combined OFDM symbol {n,n+1}, as is illustrated in Fig. 5a.

When the UE transmissions toward the transmission reception points TRP1 and TRP2 are using overlapping PRBs, the network indication on what to do, e.g., about which signal to puncture, is used in the overlapping resources an example of which is illustrated in Fig. 5b.

In accordance with an embodiment, the UE adds to this combined OFDM symbol a prolonged CP, whose duration depends on how large the difference between the two TAs is. In other words, the prolonged CP has a size to ensure that the transmission of the combined OFDM symbol starts at the start of symbol n and finishes at the end of symbol n+1.

Regarding transmission toward TRP1, this combined OFDM symbol with prolonged CP continues after the planned end of OFDM symbol n.

Regarding transmission toward TRP2, this combined OFDM symbol with prolonged CP starts before the planned start of OFDM symbol n+1.

The UE may transmit this combined OFDM symbol with prolonged CP using a broader beam toward both these transmission reception points TRP1 and TRP2, as was mentioned above.

Different beamformers are supposed to be used in the two slots for transmitting toward the two transmission reception points TRP1 and TRP2. In order to make sure that the signal may be properly received at both TRPs, a device may be utilized which is capable to change the beam on a per OFDM symbol basis and which transmits OFDM symbols n-13, n-12, ..., n-1, with the narrow beamformer designed based on UE-TRP1 link (the beam 401 in Fig. 4c), OFDM symbols n+2, n+3, ..., n+14, with the narrow beamformer designed based on UE-TRP2 link (the beam 403 in Fig. 4c), and the combined OFDM symbol {n,n+1} with a broader beamformer that should be designed based on both UE-TRP1 and UE-TRP2 links (the beam 406 in Fig. 4c).

UL SRS transmission triggered for this broader beamformer before the transmission of this combined OFDM symbol can be used as reference to schedule this combined OFDM symbol, for example to better estimate path gains toward the two TRPs.

In accordance with an embodiment, the UE may increase the transmission power to compensate for the loss in beamforming gain due to the UE using a broader beam 406, for the loss in power spectral density due to transmitting a larger number of PRBs in the combined OFDM symbol, and for the different path-loss toward the two TRPs.

The loss in beamforming gain is known at the UE by knowing the radiation pattern of the broader beam and the pointing direction of the narrow beams.

The loss in power spectral density is known at the UE by knowing how many more PRBs are occupied by the combined OFDM symbol (compared to the other OFDM symbols).

In case of large difference in the path-loss toward the two TRPs, the UE faces the issue of differently compensating the two signals when just one power amplifier (PA) is available (due to the single RF chain assumption). In such case, different solutions could be implemented, some examples of them are listed below:

- Different power levels are used for the two signals by digitally boosting the signal intended to the weakest TRP.
- Set a transmit power to compensate the strongest TRP path-loss (but that power level would have the drawback of being too weak for the weakest TRP).
- Set a transmit power to compensate the weakest TRP path-loss (but that power level would have the drawback of being too strong for the strongest TRP).
- Set a transmit power to compensate in the middle the path-loss toward the two TRPs (but that power level would have the drawback of being a bit too strong for the strongest TRP and a bit too weak for the weakest TRP).

It should be noted that by construction, the TRPs do not need to change any OFDM processing, i.e., CP removal and FFT size at TRPs 1 and 2 can be implemented as if the UE was not using this combined OFDM symbol scheme and operating with multiple RF chains, i.e. transmitting then as is illustrated in Fig. 4a.

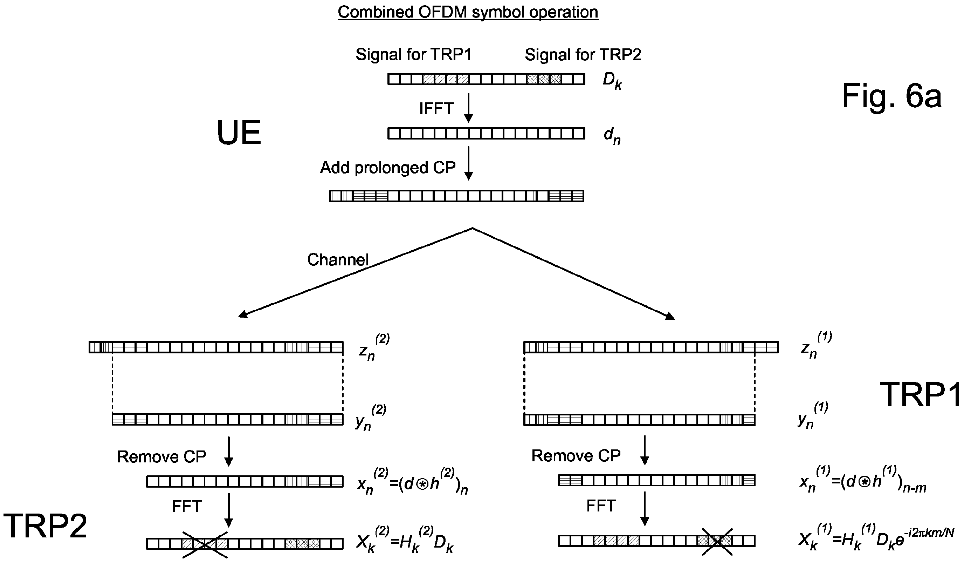

Next, signal processing operations for the combined OFDM symbol are described with reference to Fig. 6a, in accordance with an embodiment.

In Fig. 6a the signal processing performed at the UE and the TRPs are shown, explaining why the operation is transparent at the TRPs that do not need to change anything about CP removal and FFT size.

First, the UE creates the frequency domain signal $D_k$, that contains both the signal to be sent to TRP1 (diagonally hatched blocks) and the signal to be sent to TRP2 (cross-hatched blocks). For the moment it can be considered that the two signals are exactly the ones that would have been transmitted without this combined OFDM symbol scheme, although later in this specification it will be explained that a simple phase pre-compensation for TRP1 signal may be needed. The UE then computes time domain signal $d_n$ by IFFT of size $N$, add the prolonged CP (vertically hatched and horizontally hatched blocks) of length $M$, which is longer than the normal CP of length $L$. In Fig. 6a the normal length is illustrated with horizontally hatched blocks.

The generated signal is then transmitted and reaches the two TRPs via two different channels $h^{(1)}$ and $h^{(2)}$. It should be noted that, at the receiver side, each TRP needs to "extract" a signal of length $N + L$, remove the "presumed" normal CP by discarding the first $L$ samples, and then apply FFT on the remaining N samples.

In the scenario of Figs. 4a, 4b, 4c, because of the two different TA commands, TRP2 processes the "last" $N + L$ samples of the received signal $z_n^{(2)}$, i.e., somehow ignoring the first $M - L$ samples of the prolonged CP (vertically hatched blocks in the prolonged CP). Then, it discards the first $L$ samples, applies FFT on the remaining $N$ samples, and obtains signal $X_k^{(2)}$, which, on the PRBs/subcarriers allocated to the UE transmission toward TRP 2, is exactly what TRP2 would have received if the UE was transmitting normal OFDM symbols as per Fig. 4a.

On the other hand, TRP1, because of the different TA commands, processes the "first" $N + L$ samples of the received signal $z_n^{(1)}$. It then discards the first $L$ samples, and gets signal $x_n^{(1)}$, which can be simply obtained by a circular shift with delay $m$ (with $m$ known at the UE, as it is just the difference between the two TA values) of the "expected" signal (that would have required processing the "last" $N + L$ samples of $z_n^{(1)}$). TRP1 then applies FFT to the remaining $N$ samples and obtains signal

$$X_k^{(1)} = H_k^{(1)} D_k e^{-i2\pi km/N}$$

, with $H_k^{(1)}$ being the channel in the frequency domain between UE and TRP1.

It should be noted that $e^{-i2\pi km/N}$ is just a phase rotation, known at the UE side, which can be then pre-compensated at the UE when transmitting $D_k$, i.e., the UE on the PRBs allocated to the transmission toward TRP1 transmits $D_k e^{+i2\pi km/N}$ instead of just $D_k$.

In the following, some conditions for the combined OFDM symbol scheme will be provided.

The OFDM related signal processing can be done at the TRPs without being aware that the UE is using just one RF chain and implementing the idea with a combined OFDM symbol.

In fact, the solution can be implemented under certain assumptions and conditions. More specifically, all the conditions which will be mentioned below should be satisfied for a pure UE implementation solution, without any signalling informing the gNB about this specific transmission format.

The UE transmissions toward the first transmission reception point TRP1 and the second transmission reception point TRP2 are scheduled on different non-overlapping PRBs, such that both the signals can be mapped into the combined OFDM symbol without any loss of information.

As the combined OFDM symbol may be transmitted with a broader beam, if the same transmit power was to be used, there would be a loss in SNR at both TRPs. If the UE has power headroom to compensate this loss and the different path-loss toward the two TRPs, it can use a higher transmit power to compensate this power loss. Potentially the higher transmit power may even be used with different power levels for the two different signals, implemented considering a digital boost for the signal intended to the weakest TRP.

As the combined OFDM symbol may be transmitted with a different beamformer, even if the power headroom allows to compensate the SNR, the combined OFDM symbol may experience a different channel when compared to all the other "normal" OFDM symbols of the two slots. On the other hand, if the coherence bandwidth of the channel is large enough when compared to the bandwidth allocated to each transmission, the actual channel can be approximated as flat on each allocation.

Then a change in the beamformer in the combined OFDM symbol may cause only limited variations of the equivalent channel at each TRP. The combined OFDM symbol may still include the narrow beams used in the "normal" OFDM symbols. With reference to Fig. 5a the channel would then be flat on the PRBs for the first transmission reception point TRP1 (diagonally hatched blocks) and also flat on the PRBs for the second transmission reception point TRP2 (cross-hatched blocks), but of course the two channels could be different.

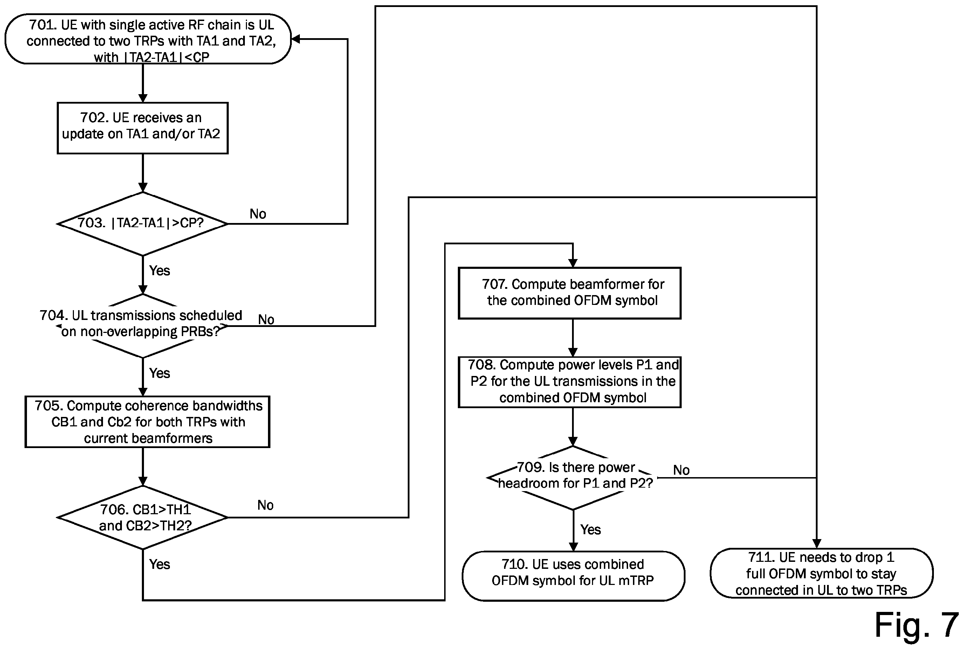

In the following, a procedure to be performed by the UE for implementing the combined OFDM symbol scheme will be described with reference to the flow diagram of Fig. 7, in accordance with an embodiment.

It is assumed that the UE with a single active RF chain is to be connected 701 in UL to two TRPs with timing advance differences less than the length of the cyclic prefix, i.e., |TA2-TA1|<CP.

The UE receives 702 updated values of TA1 and/or TA2.

In block 703 the timing advance difference is compared with the length of the cyclic prefix. If |TA2-TA1|<CP, then the UE can keep operating as it has done up that moment, for example implementing some time domain dropping for the short overlapping part. On the other hand, if |TA2-TA1|>CP, time domain dropping may cause too much performance loss and the UE needs to decide if the solution with a combined OFDM symbol can be implemented. This may include that first, the UE checks 704, if the transmissions toward TRPs 1 and 2 are using non-overlapping/different PRBs. If that is not the case, then the UE needs to drop 711 one full OFDM symbol to stay connected in UL to two TRPs.

In accordance with an embodiment, the timing advance difference may also be compared with the cyclic prefix added with a margin value. The margin value may potentially be either positive or negative. The value to be compared, i.e. CP or CP+margin, may also be called as a third threshold.

If non-overlapping PRBs are used, the UE should also check if the channels are enough flat on the two scheduled non-overlapping/different PRBs. To do that, the UE estimates 705 the coherence bandwidths CB1 and CB2 of the channels toward TRPs 1 and 2, respectively. The coherence bandwidth can be simply approximated as the inverse of the delay spread, for example.

In block 706 the first coherence bandwidth CB1 is compared with a predetermined first threshold TH1 and the second coherence bandwidth CB2 is compared with a predetermined second threshold TH2 for the two links. The thresholds TH1 and TH2 may depend on how many PRBs are scheduled for each transmission. If the comparisons reveal that either or both of the coherence bandwidths CB1, CB2 are not large enough, then the procedure continues at the block 711 i.e., the UE drops one full OFDM symbol to stay connected in UL to two TRPs.

In one alternative solution, the thresholds TH1 and TH2 are calculated as $THx = \alpha\, NPRB,x\, BPRB$, where $NPRB,x$ is the scheduled number of PRBs for the x-th UL, BPRB is the bandwidth per PRB, and $\alpha$ is a factor relating the minimum desired coherence bandwidth in comparison to the allocated bandwidth.

If CBs are large enough, the UE may need to check if it has enough power to compensate the loss in beamforming gain. The UE initially computes 707 the beamformer to be used for the combined OFDM symbol. Then the UE computes 708 the power levels P1 and P2 for the two signals to compensate the loss in beamforming gain and the different path-loss toward the two TRPs.

In block 709 the power levels P1 and P2 are examined to determine whether the power headroom allows to use P1 and P2. If not, then the procedure continues at the block 711 i.e., the UE drops one full OFDM symbol to stay connected in UL to two TRPs.

If also the power headroom is enough, then the UE can implement 710 the combined OFDM symbol scheme to keep being connected in UL toward two TRPs despite the large difference between the two TA values.

In the embodiments described above a prolonged CP was added in front of the data part of the combined OFDM symbol. In such a way, the data part of the combined OFDM symbol {n,n+1} may be timely aligned with the data part of the OFDM symbol n+1 that is expected at TRP2.

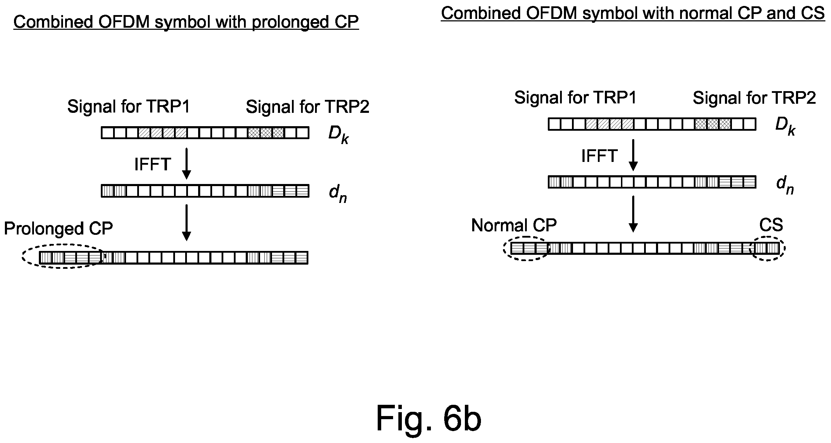

It should be noted that alternative equivalent implementations are possible, for instance adding a normal CP in front of the data part and a cyclic suffix (CS) after the data part, which may guarantee the circular convolution between transmitted signal and channels. An example of this is illustrated in the right-hand side of Fig. 6b. Furthermore, implementations in-between these two are as well possible, with a CP longer than the normal CP but shorter than the prolonged CP. However, by implementing the proper pre-compensation, still the TRPs do not need to change any OFDM processing in any of these alternative implementations.

It was mentioned above that the combined OFDM symbol may be transmitted with a beamformer that is capable to provide good signal-to-noise ratio (SNR) toward both TRPs at the same time. On the other hand, it may also be possible that the combined multiplexing scheme can be applied also when there is no beamforming at all: in such case, the problem may even be simplified, as there will be same radiation pattern with no beamforming in all the OFDM symbols, i.e., with normal (not combined) and with combined OFDM symbols. In other words, there may be no loss in beamforming gain in the combined OFDM symbol. The UE then just needs to check if the power headroom allows transmitting the two signals on the same combined OFDM symbol at the same power level used in the normal OFDM symbols.

The above explained schemes may have some benefits.

A UE can transmit in UL with mTRP TDM even with single RF chain also when the propagation delay difference among the two TRPs is large.

Better performance of the combined multiplexing scheme may be achieved when compared with normal multiplexing scheme, as no dropping in the time domain happens.

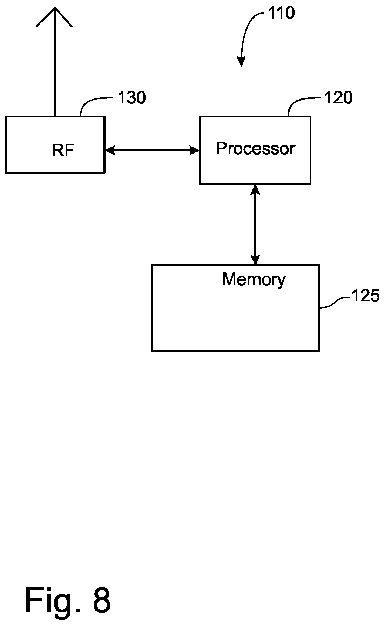

Fig. 8 illustrates an example of a block diagram of an apparatus 110 in accordance with at least some embodiments of the present invention. The apparatus 110 may be, for example, a part of the resource manager. The apparatus 110 comprises a processor 120, a memory 125 and a transceiver 130. The processor is operatively connected to the transceiver for controlling the transceiver. The memory may be operatively connected to the processor. It should be appreciated that the memory may be a separate memory or included to the processor and/or the transceiver. The memory 125 may be used to store information and computer code.

Fig. 8 also illustrates the operational units as a computer code stored in the memory but they may also be implemented using hardware components or as a mixture of computer code and hardware components.

According to an embodiment, the processor is configured to control the transceiver and/or to perform one or more functionalities described with a method according to an embodiment.

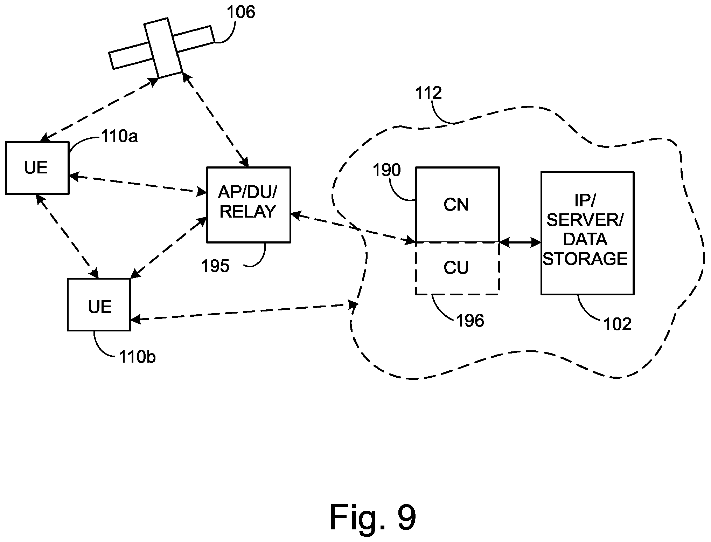

Fig. 9 depicts examples of simplified system architectures only showing some elements and functional entities, all being logical units, whose implementation may differ from what is shown. The connections shown in Fig. 9 are logical connections; the actual physical connections may be different. It is apparent to a person skilled in the art that the system typically comprises also other functions and structures than those shown in Fig. 9.

The embodiments are not, however, restricted to the system given as an example but a person skilled in the art may apply the solution to other communication systems provided with necessary properties.

The example of Fig. 9 shows a part of an exemplifying radio access network.

Fig. 9 shows user equipments 110a and 110b configured to be in a wireless connection on one or more communication channels in a cell with an access node (such as (e/g)NodeB) 195 providing the cell. The physical link from a user equipment to a (e/g)NodeB is called uplink (UL) or reverse link and the physical link from the (e/g)NodeB to the user equipment is called downlink (DL) or forward link. It should be appreciated that (e/g)NodeBs or their functionalities may be implemented by using any node, host, server or access point etc. entity suitable for such a usage.

A communication system typically comprises more than one (e/g)NodeB in which case the (e/g)NodeBs may also be configured to communicate with one another over links, wired or wireless, designed for the purpose. These links may be used for signaling purposes. The (e/g)NodeB is a computing device configured to control the radio resources of communication system it is coupled to. The NodeB may also be referred to as a base station, an access point or any other type of interfacing device including a relay station capable of operating in a wireless environment. The (e/g)NodeB includes or is coupled to transceivers. From the transceivers of the (e/g)NodeB, a connection is provided to an antenna unit that establishes bi-directional radio links to user equipments. The antenna unit may comprise a plurality of antennas or antenna elements. The (e/g)NodeB is further connected to core network 190 (CN or next generation core NGC). Depending on the system, the counterpart on the CN side can be a serving gateway (S-GW, routing and forwarding user data packets), packet data network gateway (P-GW), for providing connectivity of user equipments (UEs) to external packet data networks, or mobile management entity (MME), etc. The CN may comprise network entities or nodes that may be referred to management entities. Examples of the network entities comprise at least an Access management Function (AMF).

The user equipment (also called a user device, a user terminal, a terminal device, a wireless device, a mobile station (MS) etc.) illustrates one type of an apparatus to which resources on the air interface are allocated and assigned, and thus any feature described herein with a user equipment may be implemented with a corresponding network apparatus, such as a relay node, an eNB, and an gNB. An example of such a relay node is a layer 3 relay (self-backhauling relay) towards the base station.

The user equipment typically refers to a portable computing device that includes wireless mobile communication devices operating with or without a subscriber identification module (SIM), including, but not limited to, the following types of devices: a mobile station (mobile phone), smartphone, personal digital assistant (PDA), handset, device using a wireless modem (alarm or measurement device, etc.), laptop and/or touch screen computer, tablet, game console, notebook, and multimedia device. It should be appreciated that a user equipment may also be a nearly exclusive uplink only device, of which an example is a camera or video camera loading images or video clips to a network. A user equipment may also be a device having capability to operate in Internet of Things (IoT) network which is a scenario in which objects are provided with the ability to transfer data over a network without requiring human-to-human or human-to-computer interaction. The user equipment may also utilize cloud. In some applications, a user equipment may comprise a small portable device with radio parts (such as a watch, earphones or eyeglasses) and the computation is carried out in the cloud. The user equipment (or in some embodiments a layer 3 relay node) is configured to perform one or more of user equipment functionalities. The user equipment may also be called a subscriber unit, mobile station, remote terminal, access terminal, user terminal or user equipment (UE) just to mention but a few names or apparatuses.

Various techniques described herein may also be applied to a cyber-physical system (CPS) (a system of collaborating computational elements controlling physical entities). CPS may enable the implementation and exploitation of massive amounts of interconnected ICT devices (sensors, actuators, processors microcontrollers, etc.) embedded in physical objects at different locations. Mobile cyber physical systems, in which the physical system in question has inherent mobility, are a subcategory of cyber-physical systems. Examples of mobile physical systems include mobile robotics and electronics transported by humans or animals.

Additionally, although the apparatuses have been depicted as single entities, different units, processors and/or memory units (not all shown in Fig. 9) may be implemented.

5G enables using multiple input - multiple output (MIMO) antennas, many more base stations or nodes than the LTE (a so-called small cell concept), including macro sites operating in co-operation with smaller stations and employing a variety of radio technologies depending on service needs, use cases and/or spectrum available. 5G mobile communications support a wide range of use cases and related applications including video streaming, augmented reality, different ways of data sharing and various forms of machine type applications (such as (massive) machine-type communications (mMTC), including vehicular safety, different sensors and real-time control. 5G is expected to have multiple radio interfaces, namely below 6GHz, cmWave and mmWave, and also capable of being integrated with existing legacy radio access technologies, such as the LTE. Integration with the LTE may be implemented, at least in the early phase, as a system, where macro coverage is provided by the LTE and 5G radio interface access comes from small cells by aggregation to the LTE. In other words, 5G is planned to support both inter-RAT operability (such as LTE-5G) and inter-RI operability (inter-radio interface operability, such as below 6GHz - cmWave, below 6GHz - cmWave - mmWave). One of the concepts considered to be used in 5G networks is network slicing in which multiple independent and dedicated virtual sub-networks (network instances) may be created within the same infrastructure to run services that have different requirements on latency, reliability, throughput and mobility.

The current architecture in LTE networks is fully distributed in the radio and fully centralized in the core network. The low latency applications and services in 5G require to bring the content close to the radio which leads to local break out and multi-access edge computing (MEC). 5G enables analytics and knowledge generation to occur at the source of the data. This approach requires leveraging resources that may not be continuously connected to a network such as laptops, smartphones, tablets and sensors. MEC provides a distributed computing environment for application and service hosting. It also has the ability to store and process content in close proximity to cellular subscribers for faster response time. Edge computing covers a wide range of technologies such as wireless sensor networks, mobile data acquisition, mobile signature analysis, cooperative distributed peer-to-peer ad hoc networking and processing also classifiable as local cloud/fog computing and grid/mesh computing, dew computing, mobile edge computing, cloudlet, distributed data storage and retrieval, autonomic self-healing networks, remote cloud services, augmented and virtual reality, data caching, Internet of Things (massive connectivity and/or latency critical), critical communications (autonomous vehicles, traffic safety, real-time analytics, time-critical control, healthcare applications).

The communication system is also able to communicate with other networks, such as a public switched telephone network or the Internet 102, or utilize services provided by them. The communication network may also be able to support the usage of cloud services, for example at least part of core network operations may be carried out as a cloud service (this is depicted in Fig. 9 by "cloud" 112). The communication system may also comprise a central control entity, or a like, providing facilities for networks of different operators to cooperate for example in spectrum sharing.

Edge cloud may be brought into radio access network (RAN) by utilizing network function virtualization (NFV) and software defined networking (SDN). Using edge cloud may mean access node operations to be carried out, at least partly, in a server, host or node operationally coupled to a remote radio head or base station comprising radio parts. It is also possible that node operations will be distributed among a plurality of servers, nodes or hosts. Application of cloudRAN architecture enables RAN real time functions being carried out at the RAN side (in a distributed unit, DU 195) and non-real time functions being carried out in a centralized manner (in a centralized unit, CU 196).

It should also be understood that the distribution of labor between core network operations and base station operations may differ from that of the LTE or even be non-existent. Some other technology advancements probably to be used are Big Data and all-IP, which may change the way networks are being constructed and managed. 5G (or new radio, NR) networks are being designed to support multiple hierarchies, where MEC servers can be placed between the core and the base station or nodeB (gNB). It should be appreciated that MEC can be applied in 4G networks as well. The gNB is a next generation Node B (or, new Node B) supporting the 5G network (i.e., the NR).

5G may also utilize satellite communication to enhance or complement the coverage of 5G service, for example by providing backhauling. Possible use cases are providing service continuity for machine-to-machine (M2M) or Internet of Things (IoT) devices or for passengers on board of vehicles, or ensuring service availability for critical communications, and future railway/maritime/aeronautical communications. Satellite communication may utilize geostationary earth orbit (GEO) satellite systems, but also low earth orbit (LEO) satellite systems, in particular mega-constellations (systems in which hundreds of (nano)satellites are deployed). Each satellite 106 in the mega-constellation may cover several satellite-enabled network entities that create on-ground cells. The on-ground cells may be created through an on-ground relay node 195 or by a gNB located on-ground or in a satellite.

It is obvious for a person skilled in the art that the depicted system is only an example of a part of a radio access system and in practice, the system may comprise a plurality of (e/g)NodeBs, the user equipment may have an access to a plurality of radio cells and the system may comprise also other apparatuses, such as physical layer relay nodes or other network elements, etc. At least one of the (e/g)NodeBs or may be a Home(e/g)nodeB. Additionally, in a geographical area of a radio communication system a plurality of different kinds of radio cells as well as a plurality of radio cells may be provided. Radio cells may be macro cells (or umbrella cells) which are large cells, usually having a diameter of up to tens of kilometers, or smaller cells such as micro-, femto- or picocells. The (e/g)NodeBs of Fig. 9 may provide any kind of these cells. A cellular radio system may be implemented as a multilayer network including several kinds of cells. Typically, in multilayer networks, one access node provides one kind of a cell or cells, and thus a plurality of (e/g)NodeBs are required to provide such a network structure.

For fulfilling the need for improving the deployment and performance of communication systems, the concept of "plug-and-play" (e/g)NodeBs has been introduced. Typically, a network which is able to use "plug-and-play" (e/g)Node Bs, includes, in addition to Home (e/g)NodeBs (H(e/g)nodeBs), a home node B gateway, or HNB-GW (not shown in Fig. 9). A HNB Gateway (HNB-GW), which is typically installed within an operator's network may aggregate traffic from a large number of HNBs back to a core network.

A memory may be a computer readable medium that may be non-transitory. The memory may be of any type suitable to the local technical environment and may be implemented using any suitable data storage technology, such as semiconductor-based memory devices, magnetic memory devices and systems, optical memory devices and systems, fixed memory and removable memory. The data processors may be of any type suitable to the local technical environment, and may include one or more of general-purpose computers, special purpose computers, microprocessors, digital signal processors (DSPs) and processors based on multi-core processor architecture, as non-limiting examples.

Embodiments may be implemented in software, hardware, application logic or a combination of software, hardware and application logic. The software, application logic and/or hardware may reside on memory, or any computer media. In an example embodiment, the application logic, software or an instruction set is maintained on any one of various conventional computer-readable media. In the context of this document, a "memory" or "computer-readable medium" may be any media or means that can contain, store, communicate, propagate or transport the instructions for use by or in connection with an instruction execution system, apparatus, or device, such as a computer.

Reference to, where relevant, "computer-readable storage medium", "computer program product", "tangibly embodied computer program" etc., or a "processor" or "processing circuitry" etc. should be understood to encompass not only computers having differing architectures such as single/multi-processor architectures and sequencers/parallel architectures, but also specialized circuits such as field programmable gate arrays FPGA, application specify circuits ASIC, signal processing devices and other devices. References to computer readable program code means, computer program, computer instructions, computer code etc. should be understood to express software for a programmable processor firmware such as the programmable content of a hardware device as instructions for a processor or configured or configuration settings for a fixed function device, gate array, programmable logic device, etc.

Although the above examples describe embodiments of the invention operating within a wireless device or a gNB, it would be appreciated that the invention as described above may be implemented as a part of any apparatus comprising a circuitry in which radio frequency signals are transmitted and/or received. Thus, for example, embodiments of the invention may be implemented in a mobile phone, in a base station, in a computer such as a desktop computer or a tablet computer comprising radio frequency communication means (e.g. wireless local area network, cellular radio, etc.).

In general, the various embodiments of the invention may be implemented in hardware or special purpose circuits or any combination thereof. While various aspects of the invention may be illustrated and described as block diagrams or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

Embodiments of the inventions may be practiced in various components such as integrated circuit modules, field-programmable gate arrays (FPGA), application specific integrated circuits (ASIC), microcontrollers, microprocessors, a combination of such modules. The design of integrated circuits is a highly automated process. Complex and powerful software tools are available for converting a logic level design into a semiconductor circuit design ready to be etched and formed on a semiconductor substrate.

Programs, such as those provided by Synopsys, Inc. of Mountain View, California and Cadence Design, of San Jose, California automatically route conductors and locate components on a semiconductor chip using well established rules of design as well as libraries of pre stored design modules. Once the design for a semiconductor circuit has been completed, the resultant design, in a standardized electronic format (e.g., Opus, GDSII, or the like) may be transmitted to a semiconductor fabrication facility or "fab" for fabrication.

As used in this application, the term "circuitry" may refer to one or more or all of the following:

(a) hardware-only circuit implementations (such as implementations in only analogue and/or digital circuitry) and
(b) combinations of hardware circuits and software, such as (as applicable):

(i) a combination of analogue and/or digital hardware circuit(s) with software/firmware and
(ii) any portions of hardware processor(s) with software (including digital signal processor(s)), software, and memory(ies) that work together to cause an apparatus, such as a mobile phone or server, to perform various functions) and

(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

The foregoing description has provided by way of exemplary and non-limiting examples a full and informative description of the exemplary embodiment of this invention. However, various modifications and adaptations may become apparent to those skilled in the relevant arts in view of the foregoing description, when read in conjunction with the accompanying drawings and the appended claims. However, all such and similar modifications of the teachings of this invention will still fall within the scope of this invention.

**Claims**

1. A terminal device comprising:

   one or more transceivers; and
   one or more processors communicatively coupled to one or more transceivers, wherein the one or more processors are configured to cause the terminal device to:

   obtain first multiplexing symbols including at least one cyclic prefix for transmission to a first transmission reception point;
   obtain second multiplexing symbols including at least one cyclic prefix for transmission to a second transmission reception point, wherein the first multiplexing symbols and the second multiplexing symbols have an overlap area;
   create a combined multiplexing symbol for the overlap area, which includes signals for the first transmission reception point and the second transmission reception point.

2. The terminal device according to claim 1, wherein the one or more processors are configured to cause the terminal device to:
   use time division multiplexing to transmit the first multiplexing symbols, the combined multiplexing symbol, and the second multiplexing symbols.

3. The terminal device according to claim 1 or 2, wherein there is a timing difference between transmissions from the terminal device to the first transmission reception point and transmissions from the terminal device to the second transmission reception point.

4. The terminal device according to claim 1, 2 or 3, wherein the combined multiplexing symbol includes all signals transmitted in both multiplexing symbols n towards the first transmission reception point TRP1 and n+1 towards the second transmission reception point TRP2.

5. The terminal device according to any of the claims 1 to 4, wherein the one or more processors are configured to cause the terminal device to:
   add to the combined multiplexing symbol a prolonged cyclic prefix, whose duration is longer than the at least one cyclic prefix and depends on how large is a transmit time difference between the first multiplexing symbols and the second multiplexing symbols.

6. The terminal device according to any of the claims 1 to 5, wherein the one or more processors are configured to cause the terminal device to:
   transmit the combined multiplexing symbol with the prolonged cyclic prefix using a broader beam toward the first transmission reception point and the second transmission reception point than when transmitting the first multiplexing symbols to the first transmission reception point and the second multiplexing symbols to the second transmission reception point.

7. The terminal device according to any of the claims 1 to 6, wherein the one or more processors are configured to cause the terminal device to:
   increase a transmission power to compensate for a loss in beamforming gain due to using a broader beam, or for the loss in power spectral density due to transmitting a larger number of physical resource blocks in the combined multiplexing symbol, or for a different path-loss toward the first transmission reception point and the second transmission reception point.

8. The terminal device according to any of the claims 1 to 7, wherein the one or more processors are configured to cause the terminal device to perform one or more of the following:

   using different power levels for the signals toward the two transmission reception points by boosting the signal intended to a weaker transmission reception point;
   setting a transmit power to compensate a strongest transmission reception point path-loss;
   setting a transmit power to compensate a weakest transmission reception point path-loss;
   setting a transmit power to compensate in the middle the path-loss toward the two transmission reception points.

9. The terminal device according to any of the claims 1 to 8, wherein the first multiplexing symbols, the second multiplexing symbols and the combined multiplexing symbol are orthogonal frequency division multiplexing symbols.

10. A method comprising:

   obtaining by a terminal device first multiplexing symbols including at least one cyclic prefix for transmission to a first transmission reception point;
   obtaining by the terminal device second multiplexing symbols including at least one cyclic prefix for transmission to a second transmission reception point, wherein the first multiplexing symbols and the second multiplexing symbols have an overlap area; and
   creating by the terminal device a combined multiplexing symbol for the overlap area, which includes signals for the first transmission reception point and the second transmission reception point.

11. The method according to claim 10 comprising: using time division multiplexing to transmit the first multiplexing symbols, the combined multiplexing symbol, and the second multiplexing symbols.

12. The method according to claim 10 or 11 wherein the there is a timing difference between transmissions from the terminal device to the first transmission reception point and transmissions from the terminal device to the second transmission reception point.

13. A terminal device comprising:

means for obtaining first multiplexing symbols including at least one cyclic prefix for transmission to a first transmission reception point;
means for obtaining second multiplexing symbols including at least one cyclic prefix for transmission to a second transmission reception point, wherein the first multiplexing symbols and the second multiplexing symbols have an overlap area; and
means for creating a combined multiplexing symbol for the overlap area, which includes signals for the first transmission reception point and the second transmission reception point.

Fig. 1

EP 4 418 593 A1

Fig. 2a

Fig. 2b

EP 4 418 593 A1

Fig. 3

EP 4 418 593 A1

Fig. 4c

Fig. 4a

Fig.4b

n-13　　…　　n　　n+1　　…　　n+14　　{n,n+1}

Slot to TRP1　　　　Slot to TRP2　　　Combined
OFDM symbol

# Fig. 5a　Non-overlapping PRBs

n-13　　…　　n　　n+1　　…　　n+14　　{n,n+1}

Slot to TRP1　　　　Slot to TRP2　　　Combined
OFDM symbol

# Fig. 5b　Overlapping PRBs

Combined OFDM symbol operation

Signal for TRP1    Signal for TRP2

$D_k$

IFFT

$d_n$

UE

Fig. 6a

Add prolonged CP

Channel

$z_n^{(2)}$

$z_n^{(1)}$

$y_n^{(2)}$

TRP1

$y_n^{(1)}$

Remove CP

Remove CP

$x_n^{(2)}=(d \circledast h^{(2)})_n$

$x_n^{(1)}=(d \circledast h^{(1)})_{n-m}$

FFT

FFT

TRP2

$X_k^{(2)}=H_k^{(2)}D_k$

$X_k^{(1)}=H_k^{(1)}D_k e^{-i2\pi km/N}$

EP 4 418 593 A1

Fig. 6b

Fig. 7

**Fig. 8**

Fig. 9

EP 4 418 593 A1

Europäisches
Patentamt

European
Patent Office

Office européen
des brevets

**EUROPEAN SEARCH REPORT**

Application Number

EP 24 15 5246

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 054 101 A2 (MOTOROLA MOBILITY LLC [US]) 7 September 2022 (2022-09-07) * paragraphs [0108], [0163] - [0164] * | 1-13 | INV. H04L5/00 |
| A | EP 3 366 072 B1 (ERICSSON TELEFON AB L M [SE]) 21 September 2022 (2022-09-21) * paragraphs [0026] - [0031]; figures 2,3 * | 1-13 | |
| A | US 2023/048026 A1 (HUANG CHUN-WEI [TW] ET AL) 16 February 2023 (2023-02-16) * paragraphs [0361] - [0366] * | 1-13 | |

TECHNICAL FIELDS
SEARCHED        (IPC)

H04L

The present search report has been drawn up for all claims

| Place of search | Date of completion of the search | Examiner |
|---|---|---|
| Berlin | 11 July 2024 | Stefan, Andrei |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons
...................................................................
& : member of the same patent family, corresponding
     document

EPO FORM 1503 03.82 (P04C01)

## ANNEX TO THE EUROPEAN SEARCH REPORT
## ON EUROPEAN PATENT APPLICATION NO.

EP 24 15 5246

This annex lists the patent family members relating to the patent documents cited in the above-mentioned European search report.
The members are as contained in the European Patent Office EDP file on
The European Patent Office is in no way liable for these particulars which are merely given for the purpose of information.

11-07-2024

| Patent document cited in search report | | Publication date | Patent family member(s) | | Publication date |
|---|---|---|---|---|---|
| EP 4054101 | A2 | 07-09-2022 | CN | 109906576 A | 18-06-2019 |
| | | | CN | 114826499 A | 29-07-2022 |
| | | | EP | 3504822 A1 | 03-07-2019 |
| | | | EP | 4054101 A2 | 07-09-2022 |
| | | | US | 2018132264 A1 | 10-05-2018 |
| | | | US | 2020128576 A1 | 23-04-2020 |
| | | | US | 2022046675 A1 | 10-02-2022 |
| | | | WO | 2018085790 A1 | 11-05-2018 |
| EP 3366072 | B1 | 21-09-2022 | CN | 110100487 A | 06-08-2019 |
| | | | EP | 3366072 A1 | 29-08-2018 |
| | | | US | 2018213551 A1 | 26-07-2018 |
| | | | US | 2020154463 A1 | 14-05-2020 |
| | | | US | 2021392667 A1 | 16-12-2021 |
| | | | WO | 2018120112 A1 | 05-07-2018 |
| US 2023048026 | A1 | 16-02-2023 | CN | 115701186 A | 07-02-2023 |
| | | | KR | 20230019028 A | 07-02-2023 |
| | | | US | 2023048026 A1 | 16-02-2023 |

EPO FORM P0459

For more details about this annex : see Official Journal of the European Patent Office, No. 12/82